# FASCICULE DE BREVET EUROPEEN

(11) **EP 1 129 901 B1**
(45) Date de publication et mention de la délivrance du brevet: **01.02.2006**
(21) Numéro de dépôt: 01400544.1
(22) Date de dépôt: 01.03.2001
(51) Int. Cl.: B60Q 1/12

(54) **Procédé et dispositif d'éclairage pour véhicule automobile**
Verfahren und Einrichtung für Kraftfahrzeugbeleuchtung
Method and device for vehicle lighting

(30) Priorité: 02.03.2000 FR 0002678
(43) Date de publication de la demande: 05.09.2001
(73) Titulaire: Peugeot Citroen Automobiles, 92200 Neuilly Sur Seine (FR)
(72) Inventeur: Serezat, Laurent, 78390 Bois D'Arcy (FR)
(74) Mandataire: De Cuenca, Emmanuel Jaime

(56) Documents cités:
- DE-A- 19 601 572
- DE-A- 19 722 457
- DE-A- 19 723 045
- DE-A- 19 803 002

## Description

L'invention se rapporte à un procédé et à un dispositif d'éclairage pour véhicule automobile.

L'invention concerne plus particulièrement un système d'éclairage à fonction virage, c'est à dire comportant des projecteurs pour l'émission de faisceaux latéraux destinés à s'adapter au tracé de la route.

Il est connu par le document EP864462 (préambule de la revendication 1 resp. 2) un système d'éclairage pour véhicule automobile comportant deux projecteurs à coupure droite pour l'émission de faisceaux de virage. Ce système est pourvu de moyens de commande de la puissance d'alimentation des projecteurs en fonction du braquage des roues. En particulier, ce système détermine le braquage des roues du véhicule et commande la tension d'alimentation des projecteurs en fonction du braquage des roues, pour allumer au moins le projecteur situé à l'intérieur du virage lorsque le braquage des roues est supérieur à un seuil déterminé.

Si le système d'éclairage décrit dans le document EP864462 permet de réaliser une fonction virage pour les éclairages proches, il s'avère inadapté ou insuffisant dans certaines conditions de fonctionnement du véhicule.

A cette fin, le procédé d'éclairage selon l'invention, par ailleurs conforme à la définition générique qu'en donne le préambule ci-dessus, est essentiellement caractérisé en ce qu'il comporte une étape de détermination de la vitesse du véhicule pour déterminer la valeur du premier seuil en fonction de cette vitesse.

Un autre but de la présente invention est de proposer un dispositif d'éclairage pour véhicule automobile amélioré par rapport à l'art antérieur.

Ce but est atteint par le fait que le dispositif d'éclairage pour véhicule automobile comporte au moins deux projecteurs pour l'émission de faisceaux de virage, des moyens d'acquisition de données relatives aux conditions de fonctionnement du véhicule aptes à déterminer le braquage des roues du véhicule, des moyens de commande de la tension d'alimentation des projecteurs en fonction du braquage des roues, pour allumer au moins le projecteur situé à l'intérieur du virage lorsque le braquage des roues est supérieur à un premier seuil, les moyens d'acquisition de données étant conformés pour déterminer la vitesse du véhicule, les moyens de commande déterminant le premier seuil en fonction de la vitesse du véhicule.

Par ailleurs, l'invention peut comporter l'une ou plusieurs des caractéristiques suivantes :
- lorsque la vitesse du véhicule est inférieure ou égale à une première vitesse déterminée, le premier seuil est sensiblement égal à une première grandeur constante déterminée,
- lorsque la vitesse du véhicule est comprise entre la première vitesse et une seconde vitesse déterminée supérieure à la première vitesse, le premier seuil de braquage décroît lorsque la vitesse du véhicule augmente,
- lorsque la vitesse du véhicule est comprise entre la seconde vitesse et une troisième vitesse déterminée supérieure à la seconde, le premier seuil de braquage est sensiblement égal à une seconde grandeur,
- lorsque la vitesse du véhicule est supérieure à la troisième vitesse, le premier seuil de braquage croît avec la vitesse du véhicule,
- les moyens de commande assurant une alimentation sensiblement maximale d'au moins le projecteur situé à l'intérieur du virage lorsque le braquage des roues est supérieur à un second seuil, les moyens de commande déterminent le second seuil, en fonction de la vitesse du véhicule,
- lorsque la vitesse du véhicule est inférieure ou égale à une première vitesse, le second seuil est sensiblement égal à une troisième grandeur constante déterminée,
- lorsque la vitesse du véhicule est comprise entre la première vitesse et une seconde vitesse déterminée supérieure à la première vitesse, le second seuil de braquage décroît lorsque la vitesse du véhicule augmente,
- lorsque la vitesse du véhicule est comprise entre la seconde et une troisième vitesse déterminée supérieure à la seconde vitesse, le second seuil de braquage est sensiblement égal à une quatrième grandeur constante déterminée,
- lorsque la vitesse du véhicule est supérieure à la troisième vitesse, le second seuil de braquage croît avec la vitesse du véhicule,
- les moyens de commande assurent une augmentation de la tension d'alimentation d'au moins le projecteur situé à l'intérieur du virage lorsque le braquage des roues croît entre les premier et second seuils, les moyens de commande déterminant un seuil de braquage intermédiaire situé entre les premier et second seuils et augmentent la tension d'alimentation du ou des projecteurs plus rapidement lorsque le braquage est supérieur au seuil intermédiaire que lorsque braquage est inférieur à ce seuil intermédiaire,
- les moyens de commande déterminent le seuil intermédiaire en fonction de la vitesse du véhicule,
- les moyens d'acquisition de données comportent des moyens de mesure de l'angle du volant, les moyens de commande déterminant le braquage des roues en fonction de la mesure de l'angle du volant du véhicule.

D'autres particularités et avantages apparaîtront à la lecture de la description ci-après faite en référence aux figures dans lesquelles :
- la figure 1 représente une vue de dessus schématique d'un véhicule comportant deux projecteurs à fonction virage,
- la figure 2 représente schématiquement l'architecture et le fonctionnement d'un exemple de réalisation préféré du dispositif d'éclairage conforme à l'invention,
- la figure 3 représente un exemple de réalisation préféré selon l'invention de la courbe représentative de la tension d'alimentation d'un projecteur de virage en fonction de l'angle volant du véhicule,
- la figure 4 représente un second mode de réalisation conforme à l'invention de la courbe représentative de la tension d'alimentation d'un projecteur de virage en fonction de l'angle volant du véhicule,
- les figures 5 à 7 représentent respectivement les variations de trois seuils de braquage des roues du véhicule en fonction de la vitesse du véhicule.

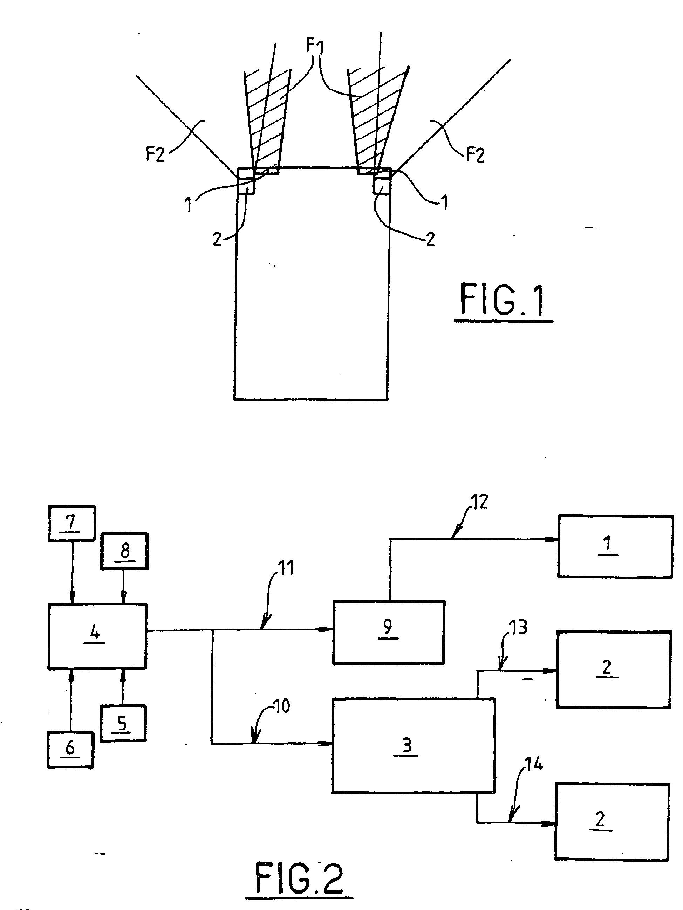

Le dispositif d'éclairage représenté aux figures 1 et 2 comporte deux projecteurs 1 pour l'émission de faisceaux (F1) de codes et deux projecteurs 2 à fonction virage qui assure un éclairage sensiblement latéral (faisceaux F2). Le véhicule comporte également des projecteurs de faisceaux lointains non représentés. Les projecteurs de code 1 et les projecteurs 2 de virage sont disposés à l'avant du véhicule. Classiquement, les projecteurs 2 de virage peuvent être des projecteurs à coupure droite, par exemple des projecteurs dits anti-brouillard.

En se référant à présent à la figure 2, le dispositif d'éclairage selon l'invention comporte des moyens 5, 6, 7, 8 d'acquisition de données relatives aux conditions de fonctionnement du véhicule. Les moyens 5, 6, 7, 8 d'acquisition de données sont reliés à des moyens 3, 4, 9 de commande de la tension T d'alimentation des projecteurs 1, 2.

Plus précisément, l'architecture électronique du dispositif d'éclairage peut-être une architecture multiplexée, par exemple du type VAN.

Les moyens 3, 4, 9 de commande des projecteurs 1, 2 comportent un calculateur 4 de commande, par exemple le Boîtier de Servitude Intelligent (BSI) du véhicule.

Le calculateur 4 de commande est relié par une première ligne ou bus 11 à un premier actionneur 9. Le premier actionneur 9 est relié par une ligne ou bus 12 aux protecteurs 1 de code et assure ou non l'allumage de ces projecteurs en fonction des commandes numériques délivrées par le calculateur 4. Par exemple, le premier actionneur 9 commande la tension d'alimentation des projecteurs 1 de code en mode "tout ou rien", c'est à dire que les deux projecteurs 1 de code sont simultanément soit allumés soit éteints.

Le calculateur 4 de commande est relié par une seconde ligne ou bus 10 à un second actionneur 3. Le second actionneur 3 est relié quant à lui aux deux projecteurs 2 de virage par deux lignes distinctes 13, 14. Le second actionneur 3 est conformé pour pouvoir délivrer une tension T d'alimentation variable aux projecteurs 2 de virage. C'est à dire que, en fonction des commandes numériques délivrées par le calculateur 4, le second actionneur 3 peut allumer ou éteindre indépendamment chacun des deux projecteurs 2 de virage. De même, le second actionneur 3 peut délivrer une tension variable et distincte à chacun des deux projecteurs 2 de virage.

Bien entendu, il est possible d'envisager un dispositif dans lequel un unique actionneur assure l'alimentation aussi bien des projecteurs 1 de code que des projecteurs 2 de virage.

Les moyens 5, 6, 7, 8 d'acquisition de données relatives aux conditions de fonctionnement du véhicule comportent un capteur 5 d'angle A du volant du véhicule. De cette façon, lorsque le braquage des roues est supérieur à un seuil d'allumage E3 déterminé, le calculateur 4 peut commander le second actionneur 3 pour allumer au moins le premier projecteur 2 situé à l'intérieur du virage.

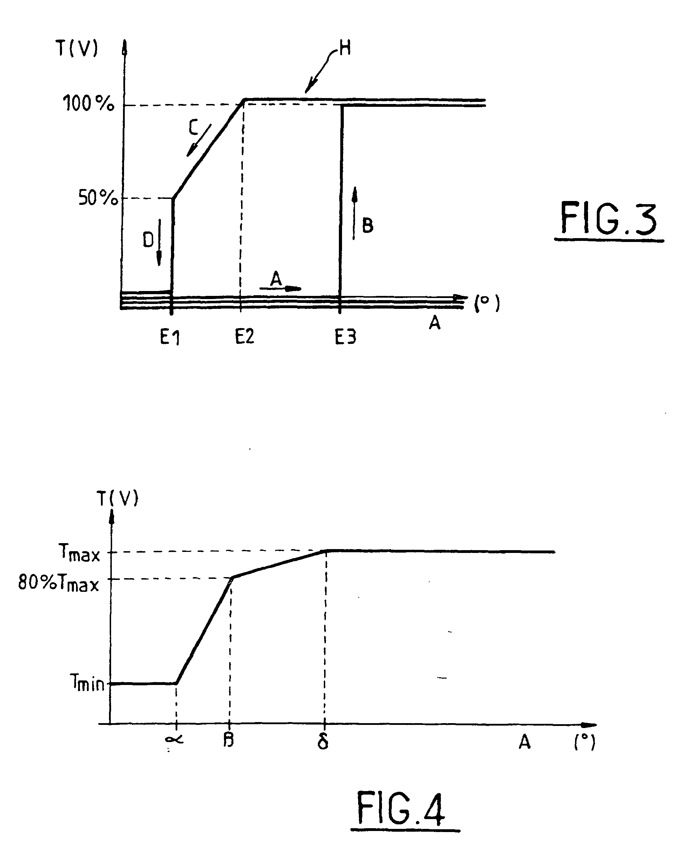

La figure 3 représente un exemple de réalisation préféré de la courbe représentative de la tension T appliquée à un projecteur 2 de virage en fonction de l'angle A du volant du véhicule. Par soucis de simplification, seule la courbe de la tension T appliquée à un projecteur 2 est représentée à la figure 3. La courbe de la tension T appliquée à l'autre projecteur 2 de virage peut être symétrique par rapport à l'axe des ordonnées (tension T).

La loi de commande de la tension T d'alimentation des projecteurs en fonction de l'angle A volant est donnée, par exemple, par une modélisation contenue dans une mémoire reliée ou intégrée au calculateur 4. De même, on peut envisager que le calculateur 4 peut contenir une ou plusieurs modélisations d'éclairage en fonction du type de véhicule et/ou du pays d'utilisation du véhicule et/ou de la demande de l'utilisateur. Par ailleurs, un périphérique apte à être relié au calculateur 4 peut permettre de modifier et/ou de changer la loi de commande de l'éclairage des projecteurs 2 de virage.

En se référant à la figure 3, lorsque l'angle A volant, c'est-à-dire le braquage des roues, est supérieur à un seuil E3 dit d'allumage, au moins le projecteur 2 situé à l'intérieur du virage est allumé. Par exemple, dès que le braquage des roues est supérieur au seuil d'allumage-E3, les moyens 3, 4 de commande délivrent au projecteur 2 une tension T d'alimentation maximale (100%) correspondant à un éclairage sensiblement maximal. Lorsque l'angle A volant reste supérieur au seuil d'allumage E3, la tension T délivrée aux projecteurs 2 de virage reste de préférence sensiblement constante et maximale, même si l'angle A volant croît ou décroît au-dessus de ce seuil E3.

Selon l'invention, lorsque l'angle A volant décroît et redevient inférieur à un seuil E1 dit d'extinction, qui est inférieur au seuil d'allumage E3, les moyens 3, 4 de commande assurent l'extinction du projecteur 2 concerné.

Lorsque l'angle A volant décroît et devient inférieur au seuil d'allumage E3 mais supérieur à un seuil intermédiaire E2 qui est compris entre les seuils d'allumage E3 et d'extinction E1, la tension d'alimentation T délivrée au projecteur 2 peut rester sensiblement constante et maximale.

Enfin, lorsque l'angle A au volant continue de décroître entre le seuil intermédiaire E2 et le seuil d'extinction E1, la tension d'alimentation T délivrée au projecteur 2 décroît avec l'angle A volant. De préférence, entre les seuils intermédiaire E2 et d'extinction E1, la tension T délivrée au projecteur 2 est proportionnelle à l'angle A volant.

Par exemple, la tension d'alimentation T délivrée au projecteur 2 décroît entre les seuils intermédiaire E2 et d'extinction E1, de façon à atteindre une tension comprise entre 40 et 60% environ de la tension maximale d'éclairage du projecteur 2 lorsque l'angle A volant tend vers le seuil d'extinction E1. De préférence, la tension d'alimentation T délivrée au projecteur 2 tend vers 50% environ de la tension maximale lorsque l'angle A volant tend vers le seuil d'extinction E1.

Ainsi, la courbe représentative de la tension T appliquée au projecteur 2 de virage en fonction de l'angle A du volant présente une hystérésis H. Le sens de déroulement de l'hystérésis H est symbolisé par les flèches A, B, C et D.

Avantageusement, les moyens 5, 6, 7, 8 d'acquisition de données peuvent comporter des moyens 6 de détermination de la vitesse V du véhicule, tel qu'un capteur mesurant la vitesse du véhicule (figure 2).

Selon l'invention, les moyens 3, 4 de commande peuvent délivrer aux projecteurs 2 de virage une tension T d'alimentation qui est fonction de la vitesse V du véhicule. Par exemple, les moyens 3, 4 de commande peuvent déterminer l'un ou plusieurs des seuils E1, E2, E3 en fonction de la vitesse V du véhicule.

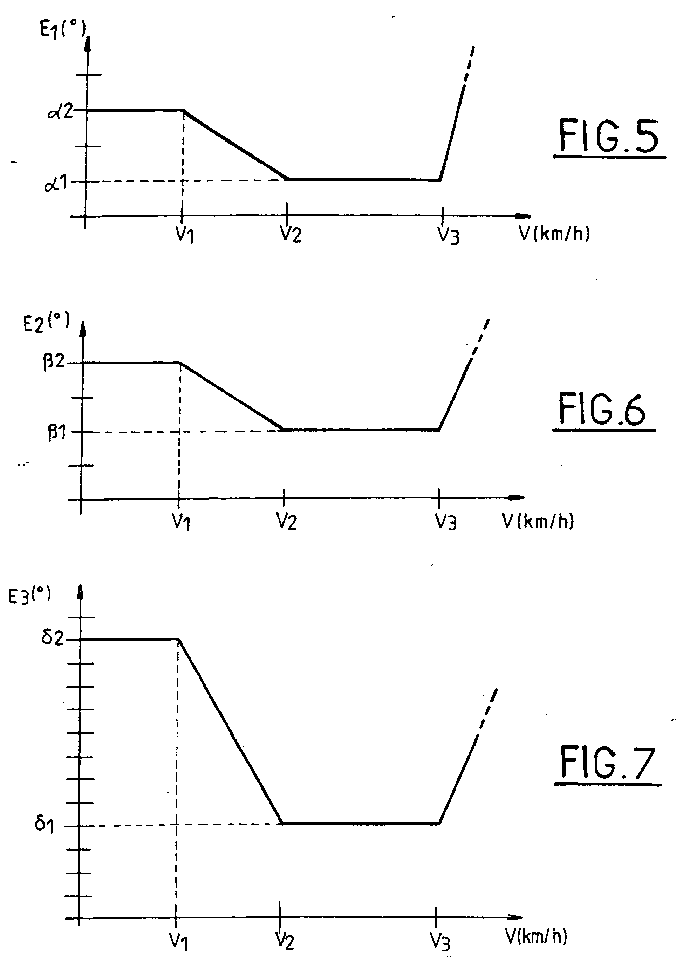

La figure 7 représente un exemple de variation du seuil d'allumage E3 en fonction de la vitesse V du véhicule. En particulier, lorsque la vitesse V du véhicule est inférieure ou égale à une première vitesse V1 déterminée, comprise par exemple entre 10 et 30km/h environ, le seuil d'allumage E3 est sensiblement égal à une première valeur constante déterminée δ2.

De préférence, la première vitesse V1 est sensiblement égale à 20 km/h. La première valeur constante δ2 est quant à elle comprise entre 15 et 25 degrés environ et de préférence de l'ordre de 20 degrés.

Par ailleurs, quand la vitesse V du véhicule est comprise entre la première vitesse V1 et une seconde vitesse V2 déterminée supérieure à la première vitesse V1, le seuil d'allumage E3 décroît lorsque la vitesse V du véhicule augmente. La seconde vitesse V2 est comprise, par exemple, entre 40 et 60 km/h environ et est de préférence égale à 50km/h. De préférence également, le seuil d'allumage E3 est inversement proportionnel à la vitesse V entre les première V1 et seconde V2 vitesses.

Lorsque la vitesse V du véhicule est comprise entre la seconde V2 et une troisième vitesse V3 déterminée supérieure à la seconde vitesse V2, le seuil d'allumage E3 est égal à une seconde constante δ1. La seconde constante δ1 est comprise entre trois et sept degrés environ et est de préférence égale à cinq degrés. La troisième vitesse V3 est comprise, par exemple, entre 90 et 110 km/h environ et est de préférence égale à 100 km/h.

Enfin, lorsque la vitesse V du véhicule est supérieure à la troisième vitesse V3, le seuil d'allumage E3 peut croître avec la vitesse V du véhicule. De préférence, au-delà de la troisième vitesse V3, le seuil d'allumage E3 croît linéairement avec la vitesse V du véhicule.

De même, comme représenté aux figures 5 et 6, les seuils d'extinction E1 et intermédiaire E2, peuvent varier en fonction de la vitesse V du véhicule. Par exemple, les courbes de variation des seuils d'extinction E1 et intermédiaire E2 en fonction de la vitesse V du véhicule peuvent avoir la même allure que la courbe décrite en référence à la figure 7 pour le seuil d'allumage E3.

Cependant, lorsque la vitesse V du véhicule est inférieure ou égale à la première vitesse V1, le seuil d'extinction E1 est sensiblement égal à une troisième constante déterminée α2 comprise entre trois et sept degrés environ et de préférence égale à cinq degrés.

Lorsque la vitesse V du véhicule est inférieure ou égale à la première vitesse V1, le seuil intermédiaire E2 est quant à lui sensiblement égal à une quatrième constante β2 comprise entre sept et treize sept degrés environ et de préférence égale à dix degrés.

Entre la seconde V2 et une troisième vitesse V3, le seuil d'extinction E1 est égal à une constante α1, de préférence sensiblement nulle tandis que le seuil intermédiaire E2 est sensiblement égal à une cinquième constante β1. La cinquième constante β1 est comprise, par exemple, entre zéro et cinq degrés environ et est de préférence égale à trois degrés.

La figure 4 représente une variante selon l'invention de la courbe représentative de la tension T délivrée à un projecteur 2 en fonction de l'angle A du volant.

Comme représenté à la figure 4, lorsque l'angle A au volant est inférieur à un premier seuil α, les moyens 3, 4 de commande délivrent une tension minimale Tmin au projecteur 2 de virage. La tension minimale Tmin appliquée au projecteur 2 de virage correspond, par exemple, à un état éteint du projecteur 2.

Lorsque l'angle au volant A est compris entre le premier seuil α et un seuil β intermédiaire supérieur au premier seuil α, la tension T délivrée au projecteur 2 de virage croît avec l'angle A au volant. De préférence, entre le premier seuil α et le seuil intermédiaire β, la tension T délivrée au projecteur 2 de virage est proportionnelle à l'angle A au volant. Par ailleurs, lorsque l'angle au volant A tend vers le seuil intermédiaire β, la tension T délivrée au projecteur 2 de virage tend, par exemple, vers 50 à 80% de la tension maximale Tmax appliquée au projecteur. La tension maximale Tmax correspond à un éclairage maximal du projecteur 2.

De plus, lorsque l'angle A au volant est compris entre le seuil intermédiaire P et un second seuil δ, la tension T délivrée au projecteur 2 de virage croît lorsque l'angle A au volant croît. Par exemple, entre le seuil intermédiaire β et le second seuil δ, la tension T délivrée au projecteur 2 de virage est proportionnel à l'angle au volant A. De préférence, la tension T délivrée au projecteur 2 de virage croît avec une pente plus élevée lorsque l'angle au volant A est compris entre le seuil intermédiaire β et le second seuil δ, qu'entre le premier seuil α le seuil β intermédiaire.

De plus, lorsque l'angle A au volant atteint le troisième seuil δ, la tension T délivrée au projecteur 2 est sensiblement égale à la tension maximale Tmax. Enfin, lorsque l'angle au volant A est supérieur au second seuil δ, la tension T délivrée au projecteur 2 reste sensiblement égale à la tension maximale Tmax.

Comme précédemment, le premier seuil α et/ou le second seuil δ et/ou le seuil intermédiaire β peuvent varier en fonction de la vitesse V du véhicule.

En particulier, les courbes de variation du premier seuil α et/ou du second seuil δ et/ou du seuil intermédiaire β, en fonction de la vitesse V du véhicule peuvent avoir la même allure que la courbe décrite en référence à la figure 7.

Les valeurs des première V1, seconde V2 et troisième vitesses V3 sont par exemple identiques aux valeurs décrites ci-dessus. Cependant, lorsque la vitesse V du véhicule est inférieure à la première vitesse V1, le premier seuil α est compris entre 20 et 40 degrés environ et de préférence de l'ordre de 30 degrés, le second seuil δ est compris entre 100 et 140 degrés environ et de préférence de l'ordre de 120 degrés, tandis que le seuil intermédiaire β est compris entre 30 et 50 degrés environ et de préférence de l'ordre de 40 degrés.

De la même façon, lorsque la vitesse V du véhicule est comprise entre les seconde V2 et troisième vitesses V3, le premier seuil α est compris entre 5 et 15 degrés environ et de préférence de l'ordre de 10 degrés, le second seuil δ est compris entre 30 et 50 degrés environ et de préférence de l'ordre de 40 degrés, tandis que le seuil intermédiaire β est compris entre 10 et 30 degrés environ et de préférence de l'ordre de 20 degrés.

Avantageusement, les moyens d'acquisition de données peuvent comporter des moyens 7 de détection de l'état d'un indicateur de changement de direction droite/gauche du véhicule.

Ainsi, les moyens 3, 4 de commande peuvent déclencher automatiquement l'allumage au moins du projecteur 2 de virage situé du côté de la direction sélectionnée par l'utilisateur du véhicule.

De préférence, lorsque le braquage des roues augmente ou est supérieur à un seuil déterminé dans la direction opposée à la direction sélectionnée par l'indicateur de changement de direction, les moyens de commande 3, 4 peuvent allumer le projecteur 2 de virage situé du côté du virage défini par le braquage des roues et/ou assurer la diminution ou l'extinction de l'éclairage du projecteur 2 de virage qui est situé du côté sélectionné par l'indicateur de changement de direction.

De plus, le véhicule peut comporter des moyens 8 de commande manuelle de l'allumage des projecteurs de virage. Ces moyens 8 de commande manuelle de l'allumage des projecteurs 2 de virage peuvent être constitués d'au moins un interrupteur que l'utilisateur actionne pour allumer ou éteindre le ou les projecteurs de virage. Le ou les interrupteurs peuvent également être conformés pour permettre de commander manuellement l'intensité désirée dans l'éclairage des projecteurs 2 de virage.

Les moyens d'acquisition de données peuvent détecter l'état d'activation des moyens 8 de commande manuelle, de façon que les moyens 3, 4 commande assurent, indépendamment du braquage des roues, l'allumage du ou des premiers projecteurs 2 sélectionnés par l'utilisateur.

En outre, les moyens d'acquisition de données peuvent comporter des moyens de détection du fonctionnement normal du capteur 5 de mesure de l'angle A du volant. Ainsi, lorsque le capteur 5 d'angle émet un signal d'erreur, le calculateur 4 peut inhiber la fonction d'allumage des projecteurs 2 de virage en fonction du braquage des roues.

De la même façon, les moyens d'acquisition de données peuvent comporter des moyens de détection du fonctionnement normal des moyens d'actionnement 3 des projecteurs 2 de virage. Ainsi, lorsque les moyens d'actionnement 3 émettent un signal d'erreur, le calculateur 4 peut inhiber la fonction d'allumage des projecteurs 2 de virage en fonction du braquage des roues.

Avantageusement, pour déterminer le ou les seuils de braquage, les moyens d'acquisition peuvent également utiliser l'une ou plusieurs des paramètres suivants : la vitesse de variation de l'angle volant, les accélérations longitudinales et transversales du véhicule et la vitesse de lacet du véhicule.

On conçoit donc aisément que le dispositif d'éclairage conforme à l'invention offre un éclairage de virage plus performant que ceux de l'art antérieur.

Enfin, bien que l'invention ait été décrite en liaison avec des modes de réalisation particuliers, elle comprend tous les équivalents techniques des moyens décrits.

## Revendications

1. Procédé d'éclairage pour véhicule automobile ayant au moins deux projecteurs (1, 2) pour l'émission de faisceaux (F2) de virage, comportant une étape de détermination du braquage des roues du véhicule, une étape de comparaison du braquage des roues avec un premier seuil (α) de braquage déterminé, et une étape de commande de la tension d'alimentation des projecteurs en fonction du braquage des roues, pour allumer au moins le projecteur (2) situé à l'intérieur du virage lorsque le braquage des roues est supérieur au premier seuil (α), **caractérisé en ce qu'**il comporte une étape de détermination de la vitesse du véhicule pour déterminer la valeur du premier seuil (α) en fonction de cette vitesse.

2. Dispositif d'éclairage pour véhicule automobile comportant au moins deux projecteurs (1, 2) pour l'émission de faisceaux (F2) de virage, des moyens (5, 6, 7, 8) d'acquisition de données relatives aux conditions de fonctionnement du véhicule aptes à déterminer le braquage des roues du véhicule, des moyens (3, 4) de commande de la tension (T) d'alimentation des projecteurs (2) en fonction du braquage des roues, pour allumer au moins le projecteur (2) situé à l'intérieur du virage lorsque le braquage des roues est supérieur à un premier seuil (α), **caractérisé en ce que** les moyens (5, 6, 7, 8) d'acquisition de données sont conformés pour déterminer la vitesse (V) du véhicule et **en ce que** les moyens (3, 4) de commande déterminent le premier seuil (α) en fonction de la vitesse (V) du véhicule.-

3. Dispositif d'éclairage selon la revendication 2, **caractérisé en ce que**, lorsque la vitesse (V) du véhicule est inférieure ou égale à une première vitesse (V1) déterminée, le premier seuil (α) est sensiblement égal à une première grandeur (α2) constante déterminée.

4. Dispositif d'éclairage selon la revendication 3, **caractérisé en ce que** lorsque la vitesse (V) du véhicule est comprise entre la première vitesse (V1) et une seconde vitesse (V2) déterminée supérieure à la première vitesse (V1), le premier seuil (α) de braquage décroît lorsque la vitesse du véhicule augmente.

5. Dispositif d'éclairage selon la revendication 4, **caractérisé en ce que** lorsque la vitesse (V) du véhicule est comprise entre la seconde vitesse (V2) et une troisième vitesse (V3) déterminée supérieure à la seconde (V2), le premier seuil (α) de braquage est sensiblement égal à une seconde grandeur.

6. Dispositif d'éclairage selon la revendication 5, **caractérisé en ce que** lorsque la vitesse (V) du véhicule est supérieure à la troisième vitesse (V3), le premier seuil (α) de braquage croît avec la vitesse (V) du véhicule.

7. Dispositif d'éclairage selon l'une quelconque des revendications 2 à 6, les moyens (3, 4) de commande assurant une alimentation sensiblement maximale d'au moins le projecteur (2) situé à l'intérieur du virage lorsque le braquage des roues est supérieur à un second seuil (δ), **caractérisé en ce que** les moyens (3, 4) de commande déterminent le second seuil (δ), en fonction de la vitesse (V) du véhicule.

8. Dispositif d'éclairage selon les revendications 3 et 7, **caractérisé en ce que** lorsque la vitesse (V) du véhicule est inférieure ou égale à une première vitesse (V1), le second seuil (δ) est sensiblement égal à une troisième grandeur constante déterminée.

9. Dispositif d'éclairage selon la revendication 8, **caractérisé en ce que** lorsque la vitesse (V) du véhicule est comprise entre la première vitesse (V1) et une seconde vitesse (V2) déterminée supérieure à la première vitesse (V1), le second seuil (δ) de braquage décroît lorsque la vitesse du véhicule augmente.

10. Dispositif d'éclairage selon la revendication 9, **caractérisé en ce que** lorsque la vitesse (V) du véhicule est comprise entre la seconde (V2) et une troisième vitesse (V3) déterminée supérieure à la seconde vitesse (V2), le second seuil (δ) de braquage est sensiblement égal à une quatrième grandeur constante déterminée.

11. Dispositif d'éclairage selon la revendication 10, **caractérisé en ce que** lorsque la vitesse (V) du véhicule est supérieure à la troisième vitesse (V3), le second seuil (δ) de braquage croît avec la vitesse (V) du véhicule.

12. Dispositif d'éclairage selon l'une quelconque des revendications 7 à 11, les moyens (3, 4) de commande assurant une augmentation de la tension d'alimentation d'au moins le projecteur (2) situé à l'intérieur du virage lorsque le braquage des roues croît entre les premier (α) et second (δ) seuils, **caractérisé en ce que** les moyens (3, 4) de commande déterminent un seuil de braquage intermédiaire (β) situé entre les premier (α) et second (δ) seuils et augmentent la tension (T) d'alimentation du ou des projecteurs (2) plus rapidement lorsque le braquage est supérieur au seuil intermédiaire (β) que lorsque braquage est inférieur à ce seuil intermédiaire (β).

13. Dispositif d'éclairage selon la revendication 12, **caractérisé en ce que** les moyens (3, 4) de commande déterminent le seuil intermédiaire (β) en fonction de la vitesse (V) du véhicule.

14. Dispositif d'éclairage selon l'une quelconque des revendications 1 à 13, **caractérisé en ce que** les moyens (5, 6, 7, 8) d'acquisition de données comportent des moyens de mesure de l'angle (A) du volant, les moyens (3, 4) de commande déterminant le braquage des roues en fonction de la mesure de l'angle du volant du véhicule.

## Patentansprüche

1. Beleuchtungsverfahren für ein Kraftfahrzeug mit mindestens zwei Scheinwerfern (1, 2) zum Aussenden von Kurvenstrahlen (F2), das einen Schritt des Ermittelns des Einschlags der Fahrzeugräder, einen Schritt des Vergleichens des Radeinschlags mit einem ersten bestimmten Einschlag-Grenzwert (α) und einen Schritt des Steuerns der Versorgungsspannung der Scheinwerfer in Abhängigkeit vom Radeinschlag aufweist, sodass zumindest der kurveninnere Scheinwerfer (2) angeschaltet wird, wenn der Radeinschlag den ersten Grenzwert (α) übersteigt, **dadurch gekennzeichnet, dass** es einen Schritt des Erfassens der Geschwindigkeit des Fahrzeugs aufweist, um den Wert des ersten Grenzwertes (α) in Abhängigkeit von dieser Geschwindigkeit zu bestimmen.

2. Beleuchtungsvorrichtung für ein Kraftfahrzeug mit mindestens zwei Scheinwerfern (1, 2) zum Aussenden von Kurvenstrahlen (F2), Mitteln (5, 6, 7, 8) zum Erfassen von Daten über die Fahrbedingungen des Fahrzeugs, die den Radeinschlag des Fahrzeugs ermitteln können, Mitteln (3, 4) zum Steuern der Versorgungsspannung (T) der Scheinwerfer (2) in Abhängigkeit vom Radeinschlag, sodass zumindest der kurveninnere Scheinwerfer (2) angeschaltet wird, wenn der Radeinschlag einen ersten Grenzwert (α) übersteigt, **dadurch gekennzeichnet, dass** die Datenerfassungs-Mittel (5, 6, 7, 8) so ausgebildet sind, dass sie die Geschwindigkeit (V) des Fahrzeugs erfassen, und **dadurch**, dass die Steuermittel (3, 4) den ersten Grenzwert (α) in Abhängigkeit von der Geschwindigkeit (V) des Fahrzeugs bestimmen.

3. Beleuchtungsvorrichtung nach Anspruch 2, **dadurch gekennzeichnet, dass** wenn die Geschwindigkeit (V) des Fahrzeugs kleiner oder gleich einer ersten bestimmten Geschwindigkeit (V1) ist, der erste Grenzwert (α) im Wesentlichen einer ersten bestimmten konstanten Größe (α2) entspricht.

4. Beleuchtungsvorrichtung nach Anspruch 3, **dadurch gekennzeichnet, dass** wenn die Geschwindigkeit (V) des Fahrzeugs zwischen der ersten Geschwindigkeit (V1) und einer zweiten bestimmten Geschwindigkeit (V2) liegt, die höher ist als die erste Geschwindigkeit (V1), der erste Einschlag-Grenzwert (α) abnimmt, wenn die Geschwindigkeit (V) des Fahrzeugs steigt.

5. Beleuchtungsvorrichtung nach Anspruch 4, **dadurch gekennzeichnet, dass** wenn die Geschwindigkeit (V) des Fahrzeugs zwischen der zweiten Geschwindigkeit (V2) und einer dritten bestimmten Geschwindigkeit (V3) liegt, die höher ist als die zweite Geschwindigkeit (V2), der erste Einschlag-Grenzwert (α) im Wesentlichen einer zweiten Größe entspricht.

6. Beleuchtungsvorrichtung nach Anspruch 5, **dadurch gekennzeichnet, dass** wenn die Geschwindigkeit (V) des Fahrzeug höher ist als die dritte Geschwindigkeit (V3), der erste Einschlag-Grenzwert (α) mit der Geschwindigkeit (V) des Fahrzeugs steigt.

7. Beleuchtungsvorrichtung nach einem der Ansprüche 2 bis 6, bei der die Steuermittel (3, 4) für im Wesentlichen maximale Versorgung zumindest des kurveninneren Scheinwerfers (2) sorgen, wenn der Radeinschlag einen zweiten Grenzwert (δ) übersteigt, **dadurch gekennzeichnet, dass** die Steuermittel (3, 4) den zweiten Grenzwert (δ) in Abhängigkeit von der Geschwindigkeit (V) des Fahrzeugs bestimmen.

8. Beleuchtungsvorrichtung nach den Ansprüchen 3 und 7, **dadurch gekennzeichnet, dass** wenn die Geschwindigkeit (V) des Fahrzeugs kleiner oder gleich einer ersten Geschwindigkeit (V1) ist, der zweite Grenzwert (δ) im Wesentlichen einer dritten bestimmten konstanten Größe entspricht.

9. Beleuchtungsvorrichtung nach Anspruch 8, **dadurch gekennzeichnet, dass** wenn die Geschwindigkeit (V) des Fahrzeugs zwischen der ersten Geschwindigkeit (V1) und einer zweiten bestimmten Geschwindigkeit (V2) liegt, die höher ist als die erste Geschwindigkeit (V1), der zweite Einschlag-Grenzwert (δ) abnimmt, wenn die Geschwindigkeit des Fahrzeugs steigt.

10. Beleuchtungsvorrichtung nach Anspruch 9, **dadurch gekennzeichnet, dass** wenn die Geschwindigkeit (V) des Fahrzeugs zwischen der zweiten Geschwindigkeit (V2) und einer dritten bestimmten Geschwindigkeit (V3) liegt, die höher ist als die zweite Geschwindigkeit (V2), der zweite Einschlag-Grenzwert (δ) im Wesentlichen einer vierten bestimmten konstanten Größe entspricht.

11. Beleuchtungsvorrichtung nach Anspruch 10, **dadurch gekennzeichnet, dass** wenn die Geschwindigkeit (V) des Fahrzeugs höher ist als die dritte Geschwindigkeit (V3), der zweite Einschlag-Grenzwert (δ) mit der Geschwindigkeit (V) des Fahrzeugs steigt.

12. Beleuchtungsvorrichtung nach einem der Ansprüche 7 bis 11, bei der die Steuermittel (3, 4) für eine Erhöhung der Versorgungsspannung zumindest des kurveninneren Scheinwerfers (2) sorgen, wenn der Radeinschlag zwischen dem ersten Grenzwert (α) und dem zweiten Grenzwert (δ) steigt, **dadurch gekennzeichnet, dass** die Steuermittel (3, 4) einen Einschlag-Zwischenwert (β) zwischen dem ersten Grenzwert (α) und dem zweiten Grenzwert (δ) bestimmen und die Versorgungsspannung (T) des oder der Scheinwerfer (2) schneller erhöhen, wenn der Radeinschlag den Zwischenwert (β) übersteigt, als wenn der Radeinschlag kleiner ist als der Zwischenwert (β).

13. Beleuchtungsvorrichtung nach Anspruch 12, **dadurch gekennzeichnet, dass** die Steuermittel (3, 4) den Zwischenwert (β) in Abhängigkeit von der Geschwindigkeit (V) des Fahrzeugs bestimmen.

14. Beleuchtungsvorrichtung nach einem der Ansprüche 1 bis 13, **dadurch gekennzeichnet, dass** die Mittel (5, 6, 7, 8) zum Erfassen von Daten Mittel zum Messen des Lenkwinkels (A) aufweisen, wobei die Steuermittel (3, 4) den Radeinschlag in Abhängigkeit von der Messung des Lenkwinkels des Fahrzeugs bestimmen.

## Claims

1. Method of lighting for a motor vehicle having at least two headlights (1, 2) for emitting cornering beams (F2), comprising a step of determining the amount of turning of the wheels of the vehicle, a step of comparing the amount of turning of the wheels with a first predetermined threshold (α) for amount of turning, and a step of controlling the supply voltage to the headlights as a function of the amount of turning of the wheels, in order to switch on at least the headlight (2) that is located on the inside of the bend when the amount of turning of the wheels is greater than the first threshold (α), **characterised in that** it comprises a step of determining the speed of the vehicle in order to determine the value of the first threshold (α) as a function of this speed.

2. Lighting device for a motor vehicle comprising at least two headlights (1, 2) for emitting cornering beams (F2), data acquisition means (5, 6, 7, 8) for data relating to the operating conditions of the vehicle, capable of determining the amount of turning of the wheels of the vehicle, means (3, 4) for controlling the supply voltage (T) to the headlights (2) as a function of the amount of turning of the wheels, in order to switch on at least the headlight (2) that is located inside the bend when the amount of turning of the wheels is greater than a first threshold (α), **characterised in that** the data acquisition means (5, 6, 7, 8) are configured to determine the speed (V) of the vehicle and **in that** the control means (3, 4) determine the first threshold (α) as a function of the speed (V) of the vehicle.

3. Lighting device according to Claim 2, **characterised in that**, when the speed (V) of the vehicle is less than or equal to the first predetermined speed (V1), the first threshold (α) is substantially equal to a first predetermined constant value (α2).

4. Lighting device according to Claim 3, **characterised in that**, when the speed (V) of the vehicle is comprised between the first speed (V1) and a second predetermined speed (V2), greater than the first speed (V1), the first turning threshold (α) decreases as the speed of the vehicle increases.

5. Lighting device according to Claim 4, **characterised in that**, when the speed (V) of the vehicle is comprised between the second speed (V2) and a third predetermined speed (V3), greater than the second one (V2), the first turning threshold (α) is substantially equal to a second value.

6. Lighting device according to Claim 5, **characterised in that** when the speed (V) of the vehicle is greater than the third speed (V3), the first turning threshold (α) rises with the speed (V) of the vehicle.

7. Lighting device according to any one of Claims 2 to 6, the control means (3, 4) ensuring a substantially maximum supply to at least the headlight (2) that is located on the inside of the turn when the amount of turning of the wheels is greater than a second threshold (δ), **characterised in that** the control means (3, 4) determine the second threshold (δ), as a function of the speed (V) of the vehicle.

8. Lighting device according to Claims 3 and 7, **characterised in that** when the speed (V) of the vehicle is less than or equal to the first speed (V1), the second threshold (δ) is substantially equal to a third predetermined constant value.

9. Lighting device according to Claim 8, **characterised in that** when the speed (V) of the vehicle is comprised between the first speed (V1) and a second predetermined speed (V2), greater than the first speed (V1), the second turning threshold (δ) decreases as the speed of the vehicle increases.

10. Lighting device according to Claim 9, **characterised in that** when the speed (V) of the vehicle is comprised between the second (V2) and a third predetermined speed (V3), greater than the second speed (V2), the second turning threshold (δ) is substantially equal to a fourth predetermined constant value.

11. Lighting device according to Claim 10, **characterised in that** when the speed (V) of the vehicle is greater than the third speed (V3), the second turning threshold (δ) increases with the speed (V) of the vehicle.

12. Lighting device according to any one of Claims 7 to 11, the control means (3, 4) ensuring an increase in the supply voltage to at least the headlight (2) that is located on the inside of the turn when the amount of turning of the wheels increases between the first (α) and second (δ) thresholds, **characterised in that** the control means (3, 4) determine an intermediate turning threshold (β) located between the first (α) and second (δ) thresholds and increase the supply voltage (T) to the headlight(s) (2) more quickly when the amount of turning is greater than the intermediate threshold (β) than when the amount of turning is less than this intermediate threshold (β).

13. Lighting device according to Claim 12, **characterised in that** the control means (3, 4) determine the intermediate threshold (β) as a function of the speed (V) of the vehicle.

14. Lighting device according to any one of Claims 1 to 13, **characterised in that** the data acquisition means (5, 6, 7, 8) comprise means for measuring the angle (A) of the steering wheel, the control means (3, 4) determining the amount of turning of the wheels as a function of the measurement of the angle of the steering wheel of the vehicle.
